# EUROPÄISCHE PATENTSCHRIFT

(11) **EP 0 867 419 B1**
(45) Veröffentlichungstag und Bekanntmachung des Hinweises auf die Patenterteilung: **19.10.2005**
(21) Anmeldenummer: 98105038.8
(22) Anmeldetag: 19.03.1998
(51) Int. Cl.: C04B 28/04, C04B 22/04, C04B 24/26

(54) **Montageschaum für das Verfüllen von Fugen**
Construction foam for use as a joint filler
Mousse de montage pour le remplissage de joints

(30) Priorität: 20.03.1997 DE 19711666
(43) Veröffentlichungstag der Anmeldung: 30.09.1998
(73) Patentinhaber: STO AG, D-79778 Stühlingen (DE)
(72) Erfinder: Stauder, Dieter, 78166 Donaueschingen (DE); Klein, Hans, Dr., 79848 Bonndorf (DE); Weh, Walter, 79848 Bonndorf (DE); Dörflinger, Martin, 79701 Waldshut (DE)
(74) Vertreter: Leinweber & Zimmermann

(56) Entgegenhaltungen:
- EP-A- 0 073 516
- WO-A-93/03234
- WO-A-97/22567
- DE-C- 4 209 897
- GB-A- 2 017 673

## Beschreibung

Die Erfindung bezieht sich auf einen Montageschaum für das Verfüllen von Fugen zwischen Dämmplatten oder im Bereich von Tür- oder Fensterzargen auf der Basis eines Kalk-Zement-Leichtmörtels.

Für die Verfüllung von Fugen im Hoch- und Tiefbau werden in großem Umfang Polyurethan-Bauschäume verarbeitet. So werden z.B. bei der Montage von Wärmedämmverbundsystemen mit Dämmplatten aus Polystyrol-Hartschaum die auftretenden Fugen mit Polyurethan-Schaum verfugt. Für die beim Einbau von Türen und Fenstern unvermeidbaren Fugen wird ebenfalls in großen Mengen Polyurethan-Schaum eingesetzt. Diese Montageschäume sind zwar einfach zu verarbeiten, sie haben aber den Nachteil, brennbar zu sein.

In vielen Bereichen des Hoch- und Tiefbaus besteht jedoch die Anforderung, daß die verwendeten Baumaterialien unbrennbar sein müssen. Um diese Anforderungen zu erfüllen, werden z.B. bei Wärmedämmverbundsystemen bevorzugt Dämmplatten aus Mineralwolle eingesetzt. Diese Dämmplatten haben zwar den Vorteil, daß sie aufgrund ihrer Elastizität ohne Fugen verarbeitet werden können. Es bestehen aber gesundheitliche Bedenken wegen ihrer Faserstruktur.

Die EP 0 673 733 A 2 beschreibt eine faserfreie mineralische Dämmplatte, die bereits unbrennbar, aber nur gering elastisch ist. Die bei der Anwendung dieser Platte entstehenden Fugen können wegen der Forderung nach einem unbrennbaren System nicht mit PolyurethanSchäumen verfugt werden.

Auch bei Montieren von Brandschutztüren werden unbrennbare Montageschäume zum Schließen der unvermeidbaren Fugen verlangt.

Der Vollständigkeit halber sei an dieser Stelle erwähnt, daß aus der DE 37 44 210 A1 und der DE 42 09 897 C1 anorganische Schaummassen bekannt sind, die bevorzugt bei der Hinterfüllung von Hohlräumen im Untertagebau eingesetzt werden. Die Herstellung von geschäumten Körpern wird ebenfalls beschrieben. Nachteilig an diesen vorbekannten Schaummassen ist jedoch die geringe Eigenfestigkeit direkt nach dem Einbringen der Schaummassen. Ein Einsatz als Fugenfüller ist daher nicht möglich, da die beschriebenen Schaummassen vor dem Erreichen ihrer notwendigen Festigkeit aus der Fuge austreten.

An dieser Stelle ist noch zu erwähnen, daß aus der EP 0 585 790 eine Putzmischung mit Quelleffekt bekannt ist, die im wesentlichen aus Portlandzement, Füllstoffen und den bei Putz üblichen Zuschlägen besteht. Das Aufschäumen des Putzes wird durch die Zugabe von Aluminiumpulver erreicht, welches in einem alkalischen Medium durch Wasserstoffentwicklung die Quellung bewirkt. Aufgrund der hohen Dichte des beschriebenen Putzes vor dem Aufschäumen ist dieser Putz ebenfalls nicht für das Verfugen geeignet.

Ergänzend ist zu erwähnen, daß aus der EP 0 073 516 ein Gemisch bekannt ist, das mindestens 50 Gew.% Kunstharzdispersion enthält.

Die GB 2 017 673 A offenbart den Vorschlag, leichte Füllstoffe in Zementmischungen einzuführen, um den sich ergebenden Mörtel zu Ausbesserungszwecken zu verwenden. Der Gefahr des Absackens der aufgetragenen Füllstoffmasse wird dadurch begegnet, daß dem Mörtelgemisch hohle Glaspartikel sowie Polymer-Bindemittel untergemischt werden.

Der Erfindung liegt deshalb die Aufgabe zugrunde, einen Montageschaum zu entwickeln, der anstelle von Polyurethan-Bauschäumen eingesezt werden kann, jedoch den Vorzug hat, preisgünstig herstellbar und unbrennbar zu sein. Diese Aufgabe wird durch die im kennzeichnenden Teil des Patentanspruchs 1 angegebene Weiterbildung der bekannten Montageschäume gelöst.

Praktische Versuche haben gezeigt, daß sich der mit Wasser angeteigte Leichtmörtel wie bislang üblicher brennbarer Schaum in Fugen zwischen benachbarten Dämmplatten einbringen, beispielsweise zum Hinterfüllen der Zargen einer Brandabschlußtür verwenden läßt. Als sehr vorteilhaft hat es sich auch erwiesen, daß mit Hilfe des erfindungsgemäßen Schaums Dämmplatten in ihrem Randbereich im Bedarfsfall reprofilierbar sind. Die Erfindung basiert somit auf der Erkenntnis, daß es möglich ist, einen unbrennbaren Montageschaum zu schaffen, der für das Ausfüllen von Fugen bzw. Hinterfüllen von Zargen verwendbar ist, auch wenn sich Schwierigkeiten des vollständigen Ausfüllens beim Einbringen des Montageschaums zeigen, weil sich der Rest der verbleibenden Hohlräume in kurzer Zeit durch die Expansion des Materials verfüllt. Beschädigte Dämmplattenkanten lassen sich ebenso ergänzen, wie Fugen zwischen Dämmplatten ausgefüllt und damit Kältebrücken vermieden werden.

Die Erfindung richtet sich weiterhin auf die Anwendung des Montageschaums für das Verfüllen von Fugen zwischen Dämmplatten oder im Bereich von Tür- und Fensterzargen und ist dadurch gekennzeichnet, daß 1,5 bis 2,5 Gewichtsteile der Grundsubstanz mit einem Gewichtsteil Wasser angeteigt und in die zu schließende Fuge eingebracht werden.

Bei Anwendung des Montageschaums bedient man sich vorteilhafterweise einer Saug-/Spritzpistole zum Einbringen der mit Wasser angeteigten Grundsubstanz in die Fuge.

Zusammenfassend ist somit festzustellen, daß es sich bei dem Montageschaum gemäß der Erfindung um einen nichtbrennbaren mineralischen Leichtmörtel auf der Basis eines mit Dispersionspulver modifizierten Kalk-Zement-Mörtels handelt, der durch Zugabe von Aluminiumpulver nach Beigabe von Wasser um ca. 20-40 Volumen-% expandiert.

Eine besonders vorteilhafte Zusammensetzung des erfindungsgemäßen Montageschaums zeichnet sich dadurch aus, daß die Grundsubstanz des (Leicht)mörtels 35 bis 60, vorzugsweise 50 Gewichts-% . Portlandzement, 60 bis 35, vorzugsweise 43 Gewichts.-% silikatische Füllstoffe, 2 bis 5, vorzugsweise 4 Gewichts-%. Dispersionspulver als Bindemittel, etwa 0,2 bis 1, vorzugsweise 0,5 Gewichts-% Additive und als Blähmittel 0,3 bis 3, vorzugsweise 2 Gewichts-% Aluminiumpulver enthält.

Die Erfindung richtet sich weiterhin auf die Anwendung einer mineralischen (Leicht)mörtel-Grundsubstanz aus 35 bis 60, vorzugsweise 50 Gewichts-% Portlandzement, 60 bis 35., vorzugsweise 43 Gewichts-% silikatische Füllstoffe, 2 bis 5, vorzugsweise 4 Gewichts-% Dispersionspulver als Bindemittel, etwa 0,2 bis 1 vorzugsweise 0,5 Gewichts-% Additive und als Blähmittel 0,3 bis 3, vorzugsweise 2 Gewichts-% Aluminiumpulver, die mit zugefügtem Wasser in die Form eines Montageschaums angeteigt und in die zu schließende Fuge eingebracht wird. Bei dieser Anwendung werden zweckmäßigerweise etwa 1 bis 3, vorzugsweise 1,5 bis 2,5 Gewichts-% der Grundsubstanz mit einem Gewichts-% Wasser angeteigt.

Bei Anwendung des Montageschaums bedient man sich vorteilhafterweise einer Saug-/Spritzpistole zum Einbringen der mit Wasser angeteigten Grundsubstanz in die Fuge.

Zusammenfassend ist somit festzustellen, daß es sich bei dem Montageschaum gemäß der Erfindung um einen nichtbrennbaren mineralischen (Leicht)mörtel auf der Basis eines mit Dispersionspulver modifizierten Kalk-Zement-Mörtels handelt, der durch Zugabe von Aluminiumpulver nach Beigabe von Wasser um ca. 20-40 Volumen-% expandiert.

Die folgende Montageschaumrezeptur haut sich bewährt:

| Komponente | Gewichts-% |
|---|---|
| Portlandzement | 35-65 |
| silikatische Füllstoffe | 65-35 |
| Dispersionspulver als Bindemittel | 2-5 |
| Additive | 0,2-1 |
| Blähmittel auf Basis von Aluminiumpulver | 0,5-3 |

Der Portlandzement kann in den Qualitäten CEM I 32,5R oder CEM I 42,5R eingesetzt werden. Vor allem ist der Dyckerhoff Weißzement HF besonders geeignet.

Als silikatische Füllstoffe haben sich wegen dem füllenden und dämmenden Effekt vor allem expandierte silikatische Leichtfüllstoffe mit kugeliger, geschlossener Oberfläche (z. B. Fillite) bewährt.

Als Modifizierungsmittel werden Dispersionspulver auf Basis der Vinlyacetat-, Äthylen-, VeoVa®-, Vinylchlorid-, Styrol-, Acryl-, bzw. Methacryl-Copolymere verwendet. Vorteilhaft werden Dispersionspulver mit ausgeprägten hydrophobierenden Eigenschaften eingesetzt.

Unter Additive werden Verdickungsmittel und konsistenzbeeinflussende Substanzen auf Basis modifizierter Zellulose und Stärke zusammengefaßt. Ferner auch Verzögerungsmittel und Pigmente. Als besonders geeignete Verzögerungsmittel hauben stich Substanzen auf Basis der modifizierten Weinsäure erwiesen.

Der Leichtmörtel wird je nach Anwendungsbedingungen aus 1 bis 3 Gewichts-% Pulver gemäß der vorstehenden Rezeptur und 1 Gewichts-% Wasser angeteigt. Anschließend wird das Material mit einem geeigneten Werkzeug, wie z.B. einer Saug-/Spritzpistole in die Fuge, den Hohlraum o. dgl. eingebracht. Nach der durch die Art und Menge des Verzögerers (Additive) gesteuerten Verzögerung zwischen 1 und 30 Minuten beginnt der Leichtmörtel selbständig aufgrund der chemischen Reaktion des enthaltenen Aluminiumpulvers mit dem hinzugefügten Wasser zu expandieren.

## Patentansprüche

1. Montageschaum für das Verfüllen von Fugen zwischen Dämmplatten, im Bereich von Tür- oder Fensterzargen o. dgl. mit einem nichtbrennbaren mineralischen Leichtmörtel, **dadurch gekennzeichnet, daß** die Grundsubstanz des Leichtmörtels 35 bis 60, vorzugsweise 50 Gew.% Portlandzement, 65 bis 35, vorzugsweise 43 Gew.% silikatische Füllstoffe, 2 bis 5, vorzugsweise 4 Gew.% Dispersionspulver als Bindemittel, etwa 0,2 bis 1, vorzugsweise 0,5 Gew.% Additive und als Blähmittel 0,5 bis 3, vorzugsweise 2 Gew.-% Aluminiumpulver enthält.

2. Anwendung einer mineralischen Leichtmörtel-Grundsubstanz aus 35 bis 60, vorzugsweise 50 Gew.-% Portlandzement, 65 bis 35, vorzugsweise 43 Gew.% silikatische Füllstoffe, 2 bis 5, vorzugsweise 4 Gew.-% Dispersionspulver als Bindemittel, etwa 0,2 bis 1, vorzugsweise 0,5 Gew.% Additive und als Blähmittel 0,5 bis 3, vorzugsweise 2 Gew.-% Aluminiumpulver, die mit zugefügtem Wasser in die Form eines Montageschaums angeteigt und in die zu schließende Fuge den Hohlraum od. dgl. eingebracht wird.

3. Anwendung nach Anspruch 2, **dadurch gekennzeichnet, daß** etwa 1 bis 3, vorzugsweise 1,5 bis 2,5 Ges.-% der Grundsubstanz mit einem Gew.% Wasser angeteigt wird.

4. Anwendung nach Anspruch 3, **gekennzeichnet durch** Einsatz einer Saug-/Spritzpistole zum Einbringen der mit Wasser angeteigten Grundsubstanz in die Fuge, den Hohlraum o.dgl.

## Claims

1. Construction foam for filling joints between insulating boards, in the region of door or window frames or the like, comprising a non-combustible lightweight mineral mortar, **characterised in that** the basic substance of the lightweight mortar contains 35 to 60, preferably 50 % by weight Portland cement, 65 to 35, preferably 43 % by weight silicate fillers, 2 to 5, preferably 4 % by weight redispersible powder as a binder, approximately 0.2 to 1, preferably 0.5 % by weight additives and 0.5 to 3, preferably 2 % by weight aluminium powder as an expanding agent.

2. Use of a lightweight mineral mortar basic substance consisting of 35 to 60, preferably 50 % by weight Portland cement, 65 to 35, preferably 43 % by weight silicate fillers, 2 to 5, preferably 4 % by weight redispersible powder as a binder, approximately 0.2 to 1, preferably 0.5 % by weight additives and 0.5 to 3, preferably 2 % by weight aluminium powder as an expanding agent, made into a paste with added water to form a construction foam and introduced into the joint to be sealed, the cavity or the like.

3. Use according to claim 2, **characterised in that** approximately 1 to 3, preferably 1.5 to 2.5 % by weight of the basic substance is made into a paste with 1 % by weight water.

4. Use according to claim 3, **characterised by** the use of a suction/spray gun to introduce the basic substance made into a paste with water into the joint, the cavity or the like.

## Revendications

1. Mousse de montage pour le remplissage de joints dans le domaine des huisseries pour portes et fenêtres ou analogues, au moyen d'un mortier léger minéral incombustible, **caractérisée en ce que** la substance de base du mortier léger contient 35 à 60, avantageusement 50% en poids de ciment Portland, 65 à 35, avantageusement 43% en poids de charge de silicate, 2 à 5, avantageusement 4% en poids de poudre en dispersion en tant que liant, environ 0,2 à 1, avantageusement 0,5% en poids d'additif et comme agent gonflant 0,5 à 3, avantageusement 2% en poids de poudre d'aluminium.

2. Utilisation d'une substance de base en mortier léger minéral formée de 35 à 60, avantageusement 50% en poids de ciment Portland, 65 à 35, avantageusement 43% en poids de charge de silicate, 2 à 5, avantageusement 4% en poids de poudre en dispersion en tant que liant, environ 0,2 à 1, avantageusement 0,5% en poids d'additif et comme agent gonflant 0,5 à 3, avantageusement 2% en poids de poudre d'aluminium, qui est travaillée en pâte au moyen d'eau ajoutée sous la forme d'une mousse de montage et qui est introduite dans les joints à obturer des cavités ou analogues.

3. Utilisation selon la revendication 2, **caractérisée en ce qu'**environ 1 à 3, avantageusement 1,5 à 2,5% en poids de la substance de base est mis sous forme de pâte au moyen d'un pourcentage pondéral d'eau.

4. Utilisation selon la revendication 3, **caractérisée par** l'utilisation d'un pistolet d'aspiration/pulvérisation pour l'introduction de la substance de base mise en pâte avec de l'eau dans les joints, les cavités ou analogues.
